# EUROPEAN PATENT APPLICATION

(11) **EP 1 215 846 A2**
(43) Date of publication of application: **19.06.2002**
(21) Application number: 01310401.3
(22) Date of filing: 12.12.2001
(51) Int. Cl.: H04L 12/24, G06F 9/44, H04L 29/06, H04L 12/28

(54) **Appliance information transmitting/receiving method and appliance information transmitting/receiving system**

(30) Priority: 13.12.2000 JP 2000378470
(71) Applicant: MATSUSHITA ELECTRIC INDUSTRIAL CO., LTD., Kadoma-shi, Osaka 571-8501 (JP)
(72) Inventor: Igata, Yuji c/o 1006 Oaza Kadoma, Osaka 571-8501 (JP); Hasako, Satoshi c/o 1006 Oaza Kadoma, Osaka 571-8501 (JP); Ikeda, Jun c/o 1006 Oaza Kadoma, Osaka 571-8501 (JP); Higashi, Yukiya c/o/ 1006 Oaza Kadoma, Osaka 571-8501 (JP)
(74) Representative: Collingwood, Anthony Robert

(57) **Abstract**

When an appliance of a customer system receives a send instruction for identifier information which specifies this appliance, telecommunications means disposed to this appliance sends the identifier information to a server of a provider system.

Upon receipt of the identifier information by the server, a menu of provider responses is sent from the server to displaying means of the customer system. This menu is in accordance with the identifier information and structured to have a different content.

Item information selected by a customer from the menu displayed by the displaying means is then sent from the displaying means to the server of the provider system.

Receiving the item information selected by the customer, the server performs processing which corresponds to the item information.

## Description

### BACKGROUND OF THE INVENTION

### 1. Field of the Invention

The present invention relates to an appliance information transmitting/receiving method and an appliance information transmitting/receiving system between customers and providers using a network for handling information regarding appliances installed indoors.

### 2. Description of the Related Art

A conventional appliance information transmitting/receiving system is disclosed in JP10-154181A. Fig. 10 of that disclosure shows a conventional appliance information transmitting/receiving system consists of a home system 22 on the customer side. A management server 20 and a maintenance information server 21 are located on the provider side. The home system 22 includes a terminal apparatus 23, appliances B1 through LAN 26 through Bn., a television set 25, a mailing apparatus 24 and LAN 26.

The sequence of processing in the conventional appliance information transmitting/receiving system is as follows.

A malfunctioning appliance B sends an identifier specifying itself and the state of the failure through LAN 26 to the mailing apparatus 24. Upon receipt of this information, the mailing apparatus 24 sends the identifier of the malfunctioning appliance B1 to the management server 20, the terminal apparatus 23 and the network 27, and acquires an address of the maintenance information server 21 through the same telecommunications path.

The mailing apparatus 24 then sends the identifier of the malfunctioning appliance B 1 and the state of the failure to the maintenance information server 21, and acquires description information regarding the appliance which will be accumulated as mail.

Following this, the customer accesses mailing information from the mailing apparatus 24 through the television set 25. In response, the mailing apparatus 24 reproduces the appliance description information to the televison set 25, functioning as a display apparatus 25. Hence, the customer can read the appliance description information as mail.

The conventional appliance information transmitting/receiving system supports maintenance of customers in this manner. In addition, as notification of a failure of the appliances B 1 through Bn is provided in the form of mail, the time at which a customer can access the information is not restricted.

As described above, the mailing apparatus 24 is used for sending identifiers and the like to the provider (the management server 20, the maintenance information server 21), and the customer (the appliances B1 through Bn).

Hence, unless the customer properly maintains and operates the mailing apparatus 24, some trouble may occur halfway through the system. This may make it impossible to transmit identifiers of the appliances B1 through Bn.

Further, a manager for the provider always reads mail from the customers and sends appropriate description information as mail to the mailing apparatuses 24 of the customers. In this sense, telecommunications paths are complex and easily invite trouble.

### OBJECTS AND SUMMARY OF THE INVENTION

It is an object of the present invention to provide an appliance information transmitting/receiving method and an appliance information transmitting/receiving system with which it is possible to simplify telecommunications paths from customers to providers and reduce human-induced troubles as much as possible.

An appliance information transmitting/receiving method according to a first embodiment of the invention is an appliance information transmitting/receiving method for handling information regarding an appliance between the appliance and a displaying means of a customer and a server of a provider through a network, comprising: a first step at which the server receives identifier information specifying the appliance from the appliance through the network; a second step at which when the server receives the identifier information, a menu of provider responses is sentto the displaying means through the network; a third step at which the server receives, from the displaying means through the network, item information that the customer has selected from the menu which is displayed by the displaying means; and a fourth step at which when the server receives the item information selected by the customer, processes information corresponding to the item information. At the first step, the identifier information which is received is sent by telecommunications means connected to the network and disposed in the appliance in response to a send instruction for the identifier information. At the second step, the menu which is sent is structured to have different content in accordance with the identifier information.

As described above, the provider server sends the menu to the user displaying means in accordance with the identifier information which is directly sent from the customer appliance without using a mailing apparatus.

That is, the server sends the menu in accordance with a direct instruction from the appliance.

Since a telecommunications path from the customer to the provider is simplified in this manner, human-induced troubles are reduced as much as possible.

In the appliance information transmitting/receiving method according to the second embodiment of the invention, in addition to the first embodiment of the invention, at the first step, the send instruction for the identifier information received by the server is issued by an access button disposed on the appliance is pressed.

This structure allows a customer to send the identifier information by merely pressing the access button, and therefore, even a customer who is not familiar with hardware or software rarely fails to transmit the identifier information or is seldom troubled with transmitting/receiving of the identifier information, can send the identifier information simply and quickly,

Hence, the provider server receives the identifier information from a wide range of customers and can quickly deal with a wide range of customers.

In the appliance information transmitting/receiving method according to the third embodiment of the invention, in addition to the first embodiment of the invention, at the first step, the send instruction for the identifier information is issued by the appliance specified by the identifier information which is sent is selected from an appliance list which is displayed by the displaying means.

This structure allows a customer to send the identifier information by merely selecting from the information displayed on the displaying means, and therefore, even a customer who is not familiar with hardware or software rarely fails to transmit the identifier information or is seldom troubled with transmission of the identifier information, can send the identifier information simply and quickly.

Hence, the provider server can receive the identifier information from a wide range of customers and quickly deal with a wide range of customers.

In the appliance information transmitting/receiving method according to the fourth embodiment of the invention, in addition to the first embodiment of the invention, at the first step, the server receives information expressing the state of the appliance specified by the identifier information together with the identifier information from the appliance through the network, and the identifier information which is received and the information expressing the state of the appliance specified by the identifier information is information which is sent through the network by the telecommunications means disposed to the appliance.

This structure allows the provider server to obtain the information expressing the states of the appliances, and therefore, to more properly respond to customers.

In the appliance information transmitting/receiving method according to the fifth embodiment of the invention, in addition to the first embodiment of the invention, the fourth step includes a step at which, if the item information received from the displaying means is regarding an item to request repair work, when the appliance is to be collected and repaired, the server sends a menu of collecting methods to the displaying means through the network, and a step at which the server receives from the displaying means, through the network, information regarding a collecting method selected by the customer from the menu of collecting methods displayed by the displaying means.

This structure ensures that the menu of collecting methods is sent to the displaying means, and therefore, makes it possible to determine a collecting method which is convenient to a customer in a simple manner.

In the appliance information transmitting/receiving method according to the sixth embodiment of the invention, in addition to the first embodiment of the invention, the fourth step includes a step at which if the item information received from the displaying means regards an item to request repair work, when it is determined that the appliance is to be collected and repaired and the appliance is to be delivered to the provider via a third party, the server receives the identifier information regarding the appliance from a third party terminal through the network, and a step at which when the server receives the identifier information from the third party terminal, information regarding a delivery destination of the appliance is sent from the server to the third party terminal through the network, and that the information regarding the delivery destination of the appliance is in accordance with the identifier information received from the third party terminal.

This structure allows the third party to easily acquire information regarding the delivery destinations of the appliances by merely sending the identifier of the appliances to the server, and therefore, a customer does not need to be knowledgeable about the delivery destinations or notify the third party of such information.

Hence, it is possible to reduce procedures which customers need to take for delivery of the appliances to the providers, and therefore, improve the convenience of customers.

In the appliance information transmitting/receiving method according to the seventh embodiment of the invention, in addition to the first embodiment of the invention, the first step includes a step at which when the identifier information received from the appliance is unregistered, information necessary for registration is sent to the displaying means from the server through the network.

This structure allows customers to register the appliances in a simple manner by merely operating in accordance with an instruction displayed by the displaying means. Further, as registration of appliances is promoted positively to increase the number of registrations of appliances, providers can easily manage customers and provide support services.

In the appliance information transmitting/receiving method according to the eighth embodiment of the invention, in addition to the first embodiment of the invention, at the second step, the menu sent to the displaying means includes at least one of a telephone response request, a repair request, an operation method description request and another menu display request.

This structure allows customers to receive fine-tuned responses from providers.

In the appliance information transmitting/receiving method according to the ninth embodiment of the invention, in addition to the first embodiment of the invention, a plurality of the appliances are disposed and connected to a LAN, the telecommunications means of any one of the appliances is connected to the network.

This structure allows the server to communicate with other appliances through the customer appliances connected to the network and LAN.

Hence, even a customer who owns a plurality of appliances can receive services from the server, and convenience is thus improved.

An appliance information transmitting/receiving system according to the tenth embodiment of the invention is an appliance information transmitting/receiving system for handling information regarding an appliance between the appliance and displaying means of a customer and a server of a provider through a network, characterized in that the appliance comprises telecommunications means which sends identifier information to the server through the network to which the telecommunications means is connected, when the telecommunications means receives a send instruction for the identifier information specifying the appliance, and that when the server receives the identifier information, the server structures a menu of provider responses into a different content in accordance with the identifier information and sends the menu to the displaying means through the network, and when the server receives item information which is selected by the customer from the menu displayed by the displaying means, the server performs processing corresponding to the item information.

As described above, the provider server sends the menu to the user displaying means in accordance with the identifier information which is directly sent from the customer appliance without using a mailing apparatus.

In other words, the server sends the menu in accordance with a direct instruction from the appliance.

Since a telecommunications path from the customer to the provider is simplified in this manner, human-induced troubles are reduced as much as possible.

An appliance information transmitting/receiving system according to the eleventh embodiment of the invention is an appliance information transmitting/receiving system comprising an appliance of a customer and a displaying means of the customer, characterized in that the appliance comprises telecommunications means which sends identifier information to a server of a provider through a network to which the telecommunications means is connected, when the telecommunications means receives a send instruction for the identifier information specifying the appliance, the displaying means receives from the server through the network and displays a menu of provider responses which is in accordance with the identifier information, and receives from the server and displays information corresponding to item information selected by the customer from the menu which is displayed, and the menu received by the displaying means is structured to have a different content in accordance with the identifier information.

As described above, the customer appliance communicates with the provider server directly without using a mailing apparatus and accordingly retrieves the menu directly from the server.

Since a telecommumcations path from the customer to the provider is simplified in this manner, human-induced troubles are reduced as much as possible.

An appliance information transmitting/receiving system according to the twelfth embodiment of the invention is an appliance information transmitting/receiving system comprising: a server of a provider for handling information regarding an appliance of a customer through a network; and a customer information database which manages customer information, characterized in that the server receives identifier information specifying the appliance from the appliance through the network, when the server receives the identifier information, the server sends a menu of provider responses to displaying means of the customer through the network, the server receives from the displaying means through the network item information selected by the customer from the menu which is displayed by the displaying means, when the server receives the item information selected by the customer, the server performs processing corresponding to the item information, the identifier information which is received is information which is sent from telecommunications means disposed to the appliance through the network in accordance with a send instruction for the identifier information, the menu which is sent is structured to have a different content in accordance with the identifier information, and that during the processing corresponding to the item information, the customer information database is used in accordance with the item information.

As described above, the provider server sends the menu to the user displaying means in accordance with the identifier information which is directly sent from the customer appliance without using a mailing apparatus.

In other words, the server sends the menu in accordance with a direct instruction from the appliance.

Since a telecommunications path from the customer to the provider is simplified in this manner, human-induced troubles are reduced as much as possible.

In the appliance information transmitting/receiving system according to the thirteenth embodiment of the invention, in addition to the eleventh embodiment of the invention, the send instruction for the identifier information is issued in response to pressing of an access button disposed on the appliance.

This structure allows a customer to send the identifier information by merely pressing the access button, and therefore, even a customer who is not familiar with hardware or software rarely fails to transmit the identifier information or is seldom troubled with transmitting/receiving of the identifier information, can send the identifier information simply and quickly.

Hence, the provider server can receive the identifier information from a wide range of customers and quickly deal with a wide range of customers.

In the appliance information transmitting/receiving system according to the fourteenth embodiment of the invention, in addition to the eleventh embodiment of the invention, the send instruction for the identifier information is issued by the appliance specified by the identifier information which is sent is selected from an appliance list which is displayed by the displaying means.

This structure allows a customer to send the identifier information by merely selecting through the displaying means, and therefore, even a customer who is not familiar with hardware or software rarely fails to transmit the identifier information or is seldom troubled with transmitting/receiving of the identifier information, can send the identifier information simply and quickly.

Hence, the provider server can receive the identifier information from a wide range of customers and quickly deal with a wide range of customers.

In the appliance information transmitting/receiving system according to the fifteenth embodiment of the invention, in addition to the eleventh embodiment of the invention, the appliance and the displaying means are structured integral with each other.

This structure makes the system easier for customers to use.

In the appliance information transmitting/receiving system according to the sixteenth embodiment of the invention, in addition to the eleventh embodiment of the invention, the telecommunications means sends information expressing the state of the appliance specified by the identifier information together with the identifier information to the server through the network.

This structure allows the provider server to obtain the information expressing the states of the appliances, and therefore, to more properly respond to customers.

In the appliance information transmitting/receiving system according to the seventeenth embodiment of the invention, in addition to the twelfth embodiment of the invention, if the item information received from the displaying means is in regard to an item requesting repair work, when the appliance is to be collected and repaired, the server sends a menu of collecting methods to the displaying means through the network and receives from the displaying means through the network information regarding a collecting method selected by the customer.

This structure ensures that the menu of collecting methods is sent to the displaying means, and therefore, it is possible to determine a collecting method which is convenient to a customer in a simple manner.

In the appliance information transmitting/receiving system according to the eighteenth embodiment of the invention, in addition to the twelfth embodiment ofthe invention, if the item information received from the displaying means is in regard to an item to request repair work, when the server determines that the appliance needs be collected and repaired and the appliance is to be delivered to the provider via a third party, the server receives the identifier information regarding the appliance from a third party terminal through the network and accordingly sends information regarding a delivery destination of the appliance to the third party terminal through the network, and that the information regarding the delivery destination of the appliance is in accordance with the identifier information received from the third party terminal.

This structure allows the third party to easily acquire information regarding the delivery destination of the appliance by merely sending the identifier of the appliance to the server, and therefore, a customer does not need to be knowledgeable about the delivery destination or notify the third party of such information.

Hence, it is possible to reduce procedures which customers need to take for delivery of the appliances to the providers, and therefore, improve the convenience of customers.

In the appliance information transmitting/receiving system according to the nineteenth embodiment of the invention, in addition to the twelfth embodiment of the invention, when the identifier information received from the appliance is unregistered, the server sends information necessary for regimation to the displaying means from the server through the network.

This structure allows customers to register the appliances in a simple manner by merely operating in accordance with an instruction displayed by the displaying means. Further, since ibis promotes registration of appliances, the number of registrations of appliances is increased. As a result, providers can more easily manage customers and provide support services.

In the appliance information transmitting/receiving system according to the twentieth embodiment of the invention, in addition to the twelfth embodiment of the invention, the menu of provider responses which is sent from the server to the displaying means includes at least one of a telephone response request, a repair request, an operation method description request and another menu display request.

This structure allows customers to receive fine-tuned responses from providers.

In the appliance information transmitting/receiving system according to the twenty-first embodiment of the invention, in addition to the eleventh embodiment of the invention, a plurality of the appliances are disposed and connected to a LAN, and the telecommunications means of any one of the appliances is connected to the network.

This structure allows the server to communicate with other appliances through the customer appliances connected to the network and LAN.

Hence, even a customer who owns a plurality of appliances can receive services from the server, and convenience is thus improved.

The above, and other objects, features and advantages of the present embodiment of the invention will become apparent from the following description read in conjunction with the accompanying drawings, in which like reference numerals designate the same elements.

### BRIEF DESCRIPTION OF THE DRAWINGS

Fig. 1 is a block diagram showing an overall structure of an appliance information transmitting/receiving system according to a preferred embodiment of the present invention.
Fig. 2 is a block diagram showing details of the appliance shown in Fig. 1.
Fig. 3 is a flow chart showing the flow of processing in the appliance information transmitting/receiving system according to the preferred embodiment of the present invention.
Fig. 4 is a view showing an example of a menu showing responses from providers displayed by the displaying means.
Fig. 5 is a flow chart showing the flow of processing which corresponds to an item selected by a customer.
Fig. 6 is a flow chart showing the flow of processing which corresponds to a telephone response request from a customer.
Fig. 7 is a flow chart showing the flow of processing which corresponds to a repair service request from a customer.
Fig. 8 is a flow chart showing the flow of processing which corresponds to another menu display request from a customer.
Fig. 9 is a block diagram showing an overall structure of modification of the appliance information transmitting/receiving system according to the preferred embodiment of the present invention.
Fig. 10 is a block diagram showing an overall structure of a conventional appliance information transmitting/receiving system.

### DETAILED DESCRIPTION OF THE PREFERRED EMBODIMENTS

An appliance information transmitting/receiving system according to a preferred embodiment of the present invention is a maintenance system which allows a customer to make an inquiry regarding how to use a home appliance, failure, etc., to a provider through a network. Providers herein referred to include manufacturers of appliances and dealers providing appliances to customers.

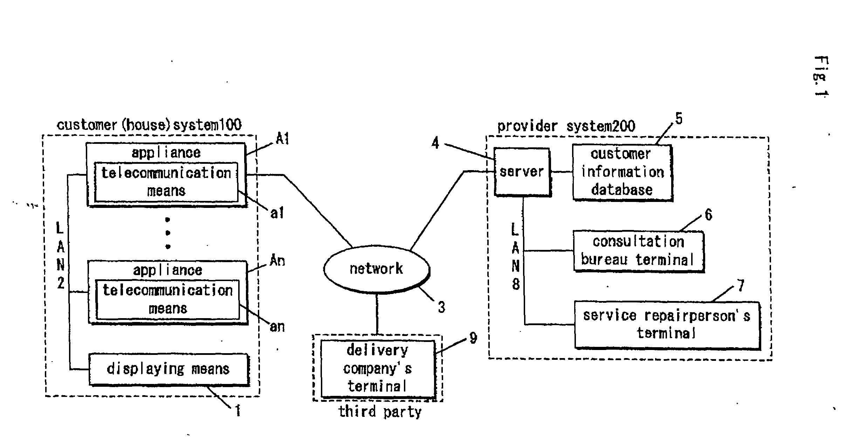

Referring to Fig. 1, an appliance information transmitting/receiving system includes es a customer system 100 and a provider system 200 as shown in Fig. 1.

The customer system 100 includes appliances A1 through An and displaying means 1. The appliances A1 through An are appliances installed in a house, such as a television set, a refrigerator and a washing machine. Each of the plurality of appliances A1 through An includes a respective telecommunications means al through an.

The appliance A1 is connected to a network 3. The network 3 may be, for example, the Internet. The displaying means 1 and the appliances A2 through An communicate with a the appliance A1 through an internal LAN 2. The network 3 communicates, via the telecommunications means al, with a server 4 in the provider system 200. In other words, telecommunications means al of the appliance A1 serves as a gateway function for the remainder of the appliances A2-An to communicate through the network 3. The appliance A1, however, may serve as both an STB (set top box) and a gateway.

In addition to the server 4, the provider system 200 includes a customer information database 5, a consultation bureau terminal 6 and a service repairperson terminal 7.

The server 4, the consultation bureau terminal 6 and the service repairperson terminal 7 are connected to a LAN 8 at the provider's location.

A delivery company terminal 9 is connected to the network 3. The delivery company terminal 9 is provided to a third party for providers and customers.

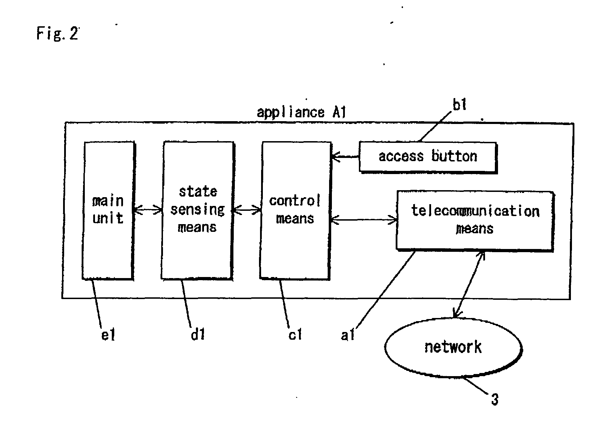

** Fig. 2 is a block diagram showing one example of the appliance A1 in Fig. 1. In Fig. 2, portions identical to those in Fig. 1 are denoted with identical reference symbols. As shown in Fig. 2, the appliance A1 comprises the telecommunications means al, an access button b1, control means c1, state sensing means d1 and a main unit e1.

The main unit e1 is a part which allows the appliance A1 to exhibit a genuine function. When the appliance A1 is a television set, for example, this part enables exhibiting television function. The state sensing means d1 senses the state of the main unit e1 and may be a microcomputer or the like which manages turning on/off of a power source, circuitry fault, etc.

The telecommunications means al is connected to the network 3 and sends information regarding the appliance A1 to the provider server 4. The telecommunications means al may be a modem, a terminal adaptor or the like, for example.

The control means c1, as a customer presses the access button b1, orders the telecommunications means al to send to the provider server 4 information expressing the state of the appliance A1 sensed by the state sensing means d1 and identifier information specifying the appliance A1. The control means c1 may be a microcomputer or the like, for example.

Although having similar structures to that of the appliance A1, the appliances A2 through An do not necessarily have a function of connecting to the network 3. Further, the telecommunications means a2 through an may be network interface cards (NIC), electric wire telecommunications modules or the like.

Next, the flow of processing will be described with reference to Fig. 1 and the flow chart.

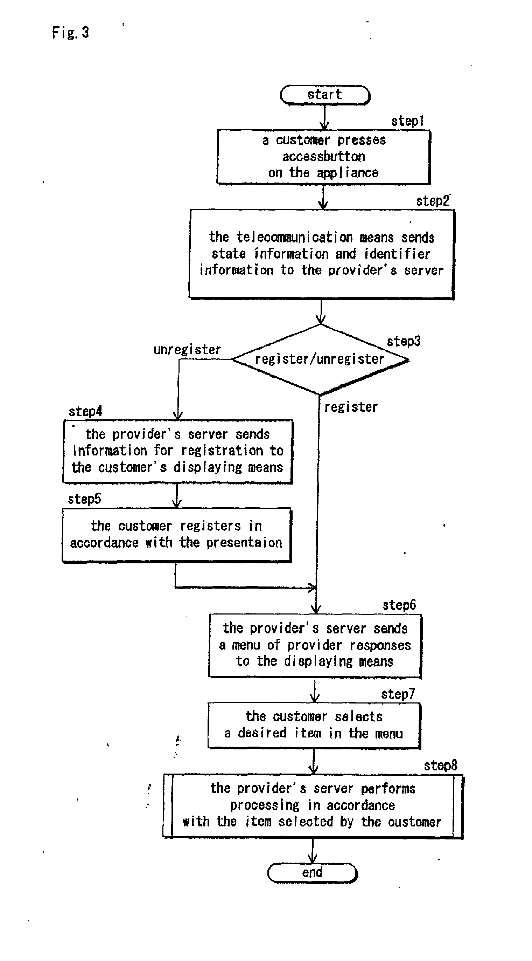

Fig. 3 is a flow chart showing the flow of processing in the appliance information transmitting/receiving system according to the preferred embodiment

As shown in Fig. 3, at Step 1, a customer presses access buttons b1 through bn which are disposed on the appliances A1 through An.

At Step 2, the telecommunications means al through an of the appliances A1 through An whose access buttons b 1 through bn have been pressed send to the provider server 4 information expressing the states of the appliances A1 through An and identifier information through the network 3. Thus, the access buttons b 1 through bn are means which issue an instruction to send the information expressing the states of the appliances A1 through An and the identifier information.

Alternatively, an instruction to send the identifier information and the like may be issued by pressing the access buttons more than once. Still alternatively, instead of pressing the access buttons, two ordinary buttons of the appliances may be pressed at the same time.

At Step 3, the provider server 4 performs processing at Step 6 when the appliances A1' through An specified by the received identifier information are registered in the customer information database 5, but performs processing at Step 4 when the appliances are unregistered.

At Step 4, the server 4 sends information necessary for registration to the customer displaying means 1 to thereby urge the customer to register. The information necessary for registration herein referred to is item information such as purchasers (customer names), addresses and telephone numbers.

The customer displaying means 1 then downloads the information necessary for registration sent from the server 4 and displays the information.

At Step 5, the customer registers the name, the address, the telephone number, etc., in accordance with the presentation displayed by the displaying means 1.

At Step 6, the server 4 sends a menu of provider responses to the displaying means 1. The displaying means 1 thereafter downloads and displays this menu.

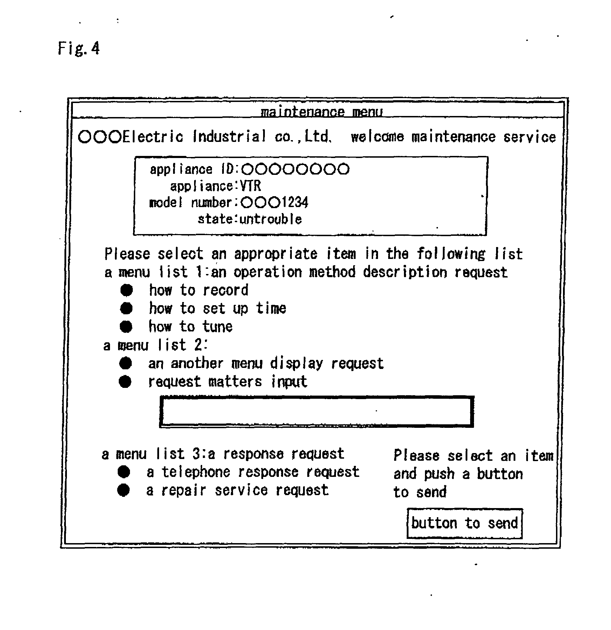

Fig. 4 is a view showing an example of the menu thus displayed by the displaying means 1. As shown in Fig. 4, items included in the menu are an operation method description request, an another menu display request, a telephone response request, a repair service request, etc.

When sending such a menu, the server 4 sends a menu which is structured to have a different content in accordance with the received identifier information regarding the appliance. In short, the server 4 sends a menu whose content corresponds to the appliance which is specified by the identifier information. The menu in Fig. 4 is an example wherein the appliance which is specified by the received identifier information is a VTR.

At Step 7, the customer selects a desired item in the menu displayed by the displaying means 1. The item information selected by the customer is then sent to the server 4.

At Step 8, the server 4 performs processing which corresponds to the item information selected by the customer. At this stage, the server 4 uses the customer information database 5 in accordance with the item information.

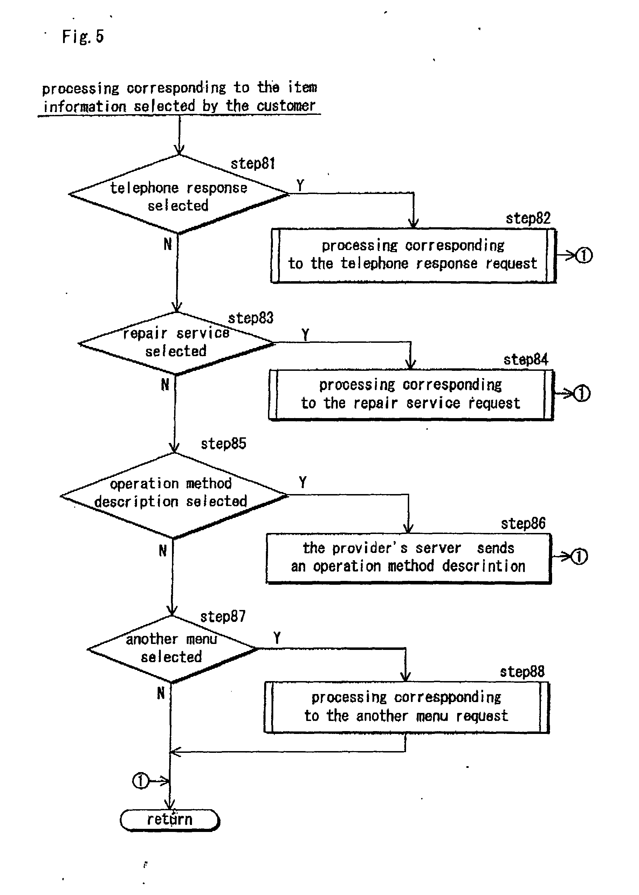

Fig. 5 is a flow chart showing details of the processing at Step 8. As shown in Fig. 5, the sequence proceeds to Step 82 when the customer has selected the telephone response request, and to Step 83 when the customer has selected another item (step 81). At Step 82, the server 4 performs processing corresponding to the telephone response request.

The sequence proceeds to Step 84 when the customer has selected the repair service request, and to Step 85 when the customer has selected another item (step 83). At Step 84, the server 4 performs processing corresponding to the repair service request

The sequence proceeds to Step 86 when the customer has selected the operation method description request, and to Step 87 when the customer has selected another item (step 85). At Step 86, the server 4 sends an operation method description to the customer displaying means 1.

When the customer has selected the another menu display request, the sequence proceeds to Step 88 (step 87). At Step 88, the server 4 performs processing corresponding to the another menu display request.

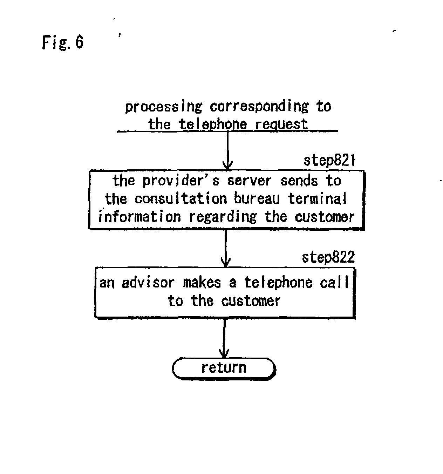

Fig. 6 is a flow chart showing details of the processing at Step 82 of Fig. 5. As shown in Fig. 6, at Step 821, the provider server 4 sends to the consultation bureau terminal 6 the identifier information regarding the appliance, the information expressing the state of the appliance, customer information and information regarding correspondence with other customers. As customer information which is to be sent, that which is registered in the customer information database 5 is used.

At Step 822, an advisor watching the information above sent to the consultation bureau terminal 6 makes a telephone call to the customer.

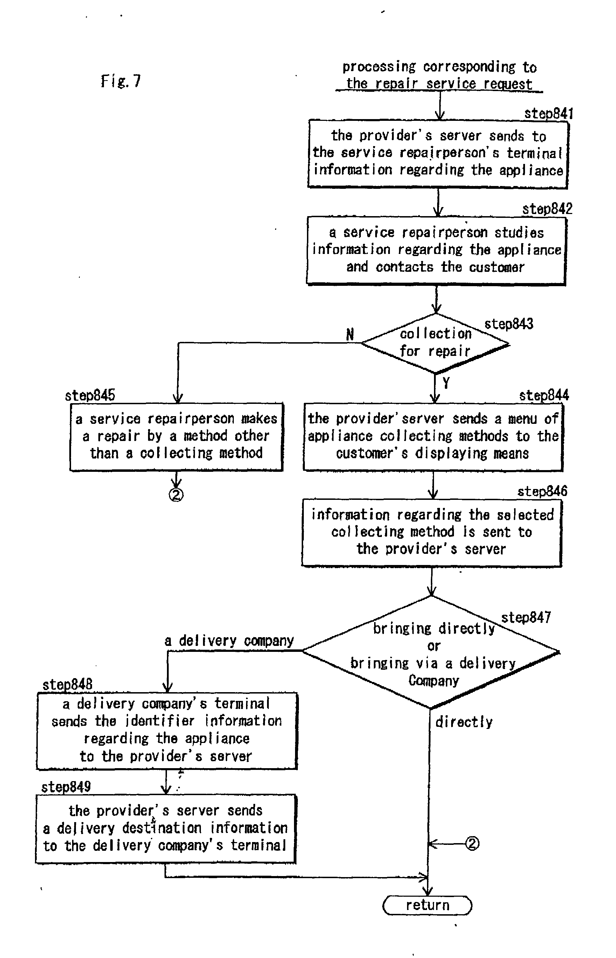

Fig. 7 is a flow chart showing details of the processing at Step 84 of Fig. 5. As shown in Fig. 7, at Step 841, the provider server 4 sends to the service repairperson terminal 7 the identifier information regarding the appliance, the information expressing the state of the appliance, customer information and information regarding correspondence with other customers. As the customer information which is to be sent, that which is registered in the customer information database 5 is used.

At Step 842, a service repairperson monitoring the information above sent to the service repairperson terminal 7 studies the content of the information expressing the state of the appliance and the like and contacts the customer.

The sequence proceeds to Step 844 when it is decided as a result of discussion with the customer that the appliance needs to be collected for repair, and to Step 845 when it is decided that the appliance should not be returned (step 843).

At Step 845, a service repairperson makes a repair by a method omer than a collecting method. For example, the service repairperson visits the customer and makes a repair, or has the customer makes a repair while instructing the customer via telephone.

On the other hand, at Step 844, the server 4 sends a menu of appliance collecting methods to the displaying means 1. Contained in the menu of appliance collecting methods as collecting methods are instructions to bring appliances to customer service counters, to bring appliances to repair service centers, to bring appliances to parcel delivery service counters, to send appliances by parcel delivery service, etc. Parcel delivery service counters may not be only reception counters of parcel delivery service companies but also convenience stores which are given a commission from parcel delivery service companies, etc.

At Step 846, the displaying means 1 displays the menu of appliance collecting methods so that the customer selects a desired collecting method in the displayed menu. Information regarding the selected collecting method is then sent to the server 4. The server 4 thereafter sends to the service repairperson terminal 7 the information regarding the collecting method selected by the customer.

When the customer has selected the method to bring appliances to repair service centers, that is, when the customer has chosen to directly bring an appliance to a repair service center, the appliance collecting method is that the customer brings the appliance to a repair service center on his or her own.

On the other hand, when the customer has selected the method to bring appliances to appliance customer service counters (dealers), the method of bringing appliances to parcel delivery service counters (delivery companies) or the method to have appliances collected by parcel delivery service (delivery companies), that is, when the customer has chosen to bring an appliance to a repair service center via a dealer or delivery company, the sequence proceeds to Step 848 (step 847).

At Step 848, receiving the appliance from the customer, a delivery company sends the identifier information regarding the received appliance to the server 4 through a delivery company terminal 9. Since dealers may be familiar with appropriate delivery destinations of appliances in some cases, the identifier information regarding appliances is sent from dealers terminals to the server 4 when necessary.

At Step 849, the server 4 sends an appropriate delivery destination and customer information to the delivery company terminal 9 in accordance with the identifier information received from the delivery company terminal 9.

In accordance with the delivery destination and the customer information received from the server 4, the delivery company terminal 9 outputs a transmission form and a receipt form for the customer.

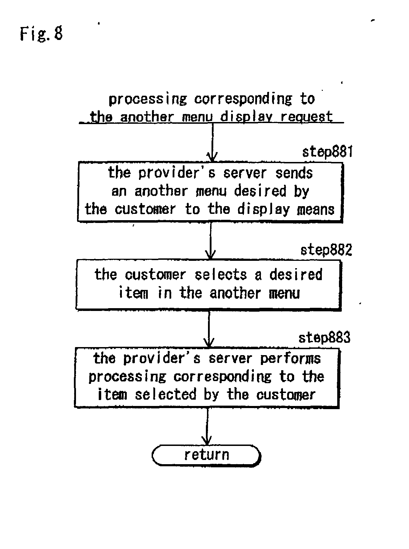

Fig. 8 is a flow chart showing details of the processing at Step 88 of Fig. 5. As shown in Fig. 8, at Step 881, the provider server 4 sends an another menu desired by the customer to the displaying means 1.

At Step 882, the customer selects a desired item in the another menu displayed by the displaying means 1. Thus selected item information is sent to the server 4.

At Step 883, the server 4 receives the item information selected by the customer and performs processing corresponding to this item information.

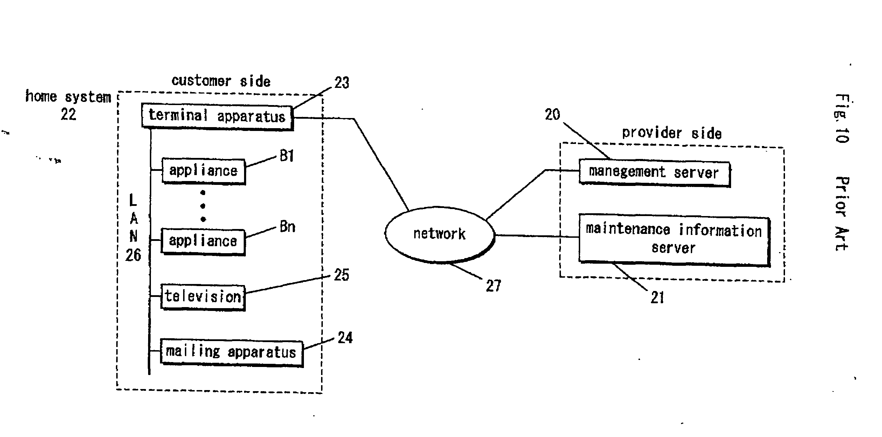

As described above, according to this embodiment, the provider server 4 sends information (menu, etc.) to the user displaying means 1 in accordance with the identifier information which is directly sent from the customers appliances A1 through An without using the mailing apparatus 24 (Fig. 10).

In short, the server 4 sends the information in accordance with direct instructions from the appliances A1 through An.

In other words, the customers appliances A1 through An, directly communicating with the provider server 4 without using the mailing apparatus 24 (Fig. 10), retrieve the information directly from the server 4.

Since telecommunications paths from customers to providers are simplified in this manner, human-induced troubles, such as an error in operating an appliance information managing apparatus itself like a mailing apparatus and insufficient management, are reduced as much as possible.

Sending of the identifier information is instructed as the access buttons b1 through bn which are disposed on the appliances A1 through An are pressed (Step 1 in Fig. 2 and Fig. 3).

Since this structure allows customers to send the identifier information to the server 4 by merely pressing the access buttons b 1 through bn, even a customer who is not familiar with hardware or software rarely fails to transmit the identifier information or is seldom troubled with transmission of the identifier information, can send the identifier information simply and quickly.

Hence, the provider server 4 can receive the identifier information from a wide range of customers and quickly deal with a wide range of customers.

Further, based on the identifier information, the telecommunications means al through an disposed to the appliances A1 through An send, together with the identifier information, the information expressing the states of the appliances specified by the identifier information to the server 4 through the network 3 (Step 2 in Fig. 3).

This structure allows the provider server 4 to obtain the information expressing the states of the appliances, and therefore, to more properly respond to the customers.

In addition, if the item information received from the displaying means 1 is regarding an item to request repair service (Step 83 in Fig. 5), when the appliances A1 through An are to be collected for repair (Step 843 in Fig. 7), the server 4 sends the menu of collecting methods to the displaying means 1 through the network 3 (Step 844 in Fig. 7) and receives information regarding a collecting method selected by a customer from the displaying means 1 through the network 3 (Step 846 in Fig. 7).

This structure ensures that the menu of collecting methods is sent to the displaying means 1, and therefore, a customer can easily determine a collecting method which is convenient to the customer.

Further, when the item information received from the displaying means 1 is regarding an item to request repair service (Step 83 in Fig. 5), if the server 4 determines that the appliances A1 through An are to be collected (Step 843 in Fig. 7) and that the appliances A1 through An are to be delivered to providers through delivery companies (Step 847 in Fig. 7), the server 4 receives the identifier information regarding appliances through the delivery company terminal 9 through the network 3 (Step 848 in Fig. 7) and sends information regarding the delivery destinations of the appliances to the delivery company terminal 9 through the network 3 (Step 849 in Fig. 7).

Since this structure allows delivery companies to easily obtain information regarding the delivery destinations of the appliances by merely sending the identifier information regarding the appliances to the server 4, a customer does not need to be knowledgeable about the delivery destinations or notify the delivery companies of such information.

Hence, it is possible to reduce procedures which customers need to take for delivery of the appliances A1 through An to the providers, and therefore, improve the convenience of customers.

When the identifier information received from the appliances A1 through An are unregistered, the server 4 sends information necessary for registration to the displaying means 1 through the network 3 (Step 4 in Fig. 3).

This structure allows customers to register the appliances in a simple manner by merely operating in accordance with an instruction displayed by the displaying means 1. Further, as registration of appliances is promoted positively to increase the number of registrations of appliances, providers can easily manage customers and provide support services.

Further, items contained in the menu sent from the server 4 to the displaying means 1 are atelephone response request, a repair request, an operation method description request and an another menu display request (Fig. 5).

This structure allows customers to receive fine-tuned responses from providers. The menu items are however not limited to these.

Further, the plurality of appliances A1 through An are disposed and connected to LAN 2, and the telecommunications means al of one appliance A1 is connected to the network 3.

This stnicture allows the server 4 to communicate with the other appliances A2 through An through the customer appliance A1 connected to the network 3 and LAN 2.

Hence, even a customer who owns a plurality of appliances A1 through An can receive services from the server 4, and convenience is thus improved.

Next, modification of the appliance information transmitting/receiving system according to the preferred embodiment will be described.

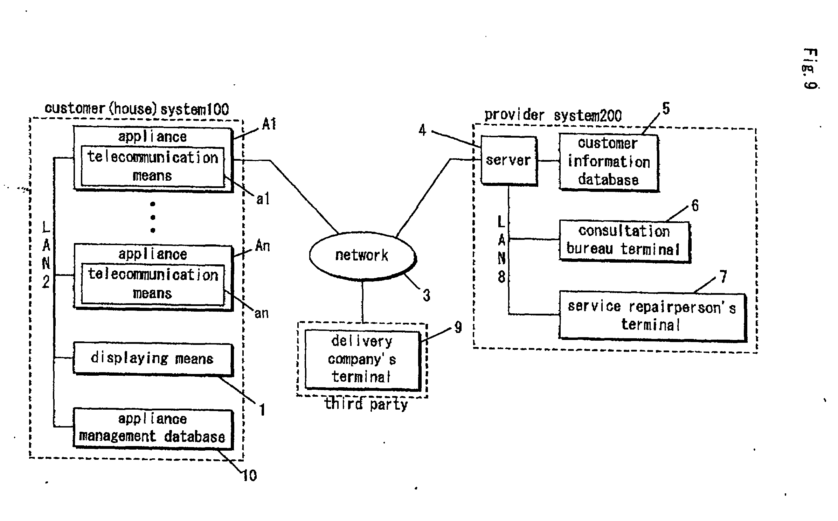

Fig. 9 is a block diagram showing an overall structure of the modification of the appliance information transmitting/receiving system according to the preferred embodiment. In Fig. 9, portions identical to those in Fig. 1 are denoted with identical reference symbols but will not be described.

As shown in Fig. 9, this modification is the customer system 100 shown in Fig. 1 as it is modified to further comprise an appliance management database 10. The stnicture is otherwise similar to that of the appliance information appliance information transmitting/receiving system shown in Fig. 1.

The appliance management database 10 manages the indoor appliances A1 through An. Where such an appliance management database 10 is disposed, at Step 1 in Fig. 1, data in the appliance management database 10 is downloaded to the displaying means 1 without using the access buttons b1 through bn of the appliances A1 through An to thereby display an appliance list. A customer can thus select in this list and send the identifier information regarding the selected appliance to the server 4.

Where such an appliance management database 10 is disposed, it is not always necessary to dispose the access buttons b1 through bn on the appliances A1 through An.

In this manner, an instruction to send the identifier information is issued by the appliance which is specified by the identifier information which is to be sent is selected, according to the modification.

Since this structure allows customers to send the identifier information to the server 4 by merely selecting through the displaying means 1, and therefore, even a customer who is not familiar with hardware or software rarely fails to transmit the identifier information or is seldom troubled with transmission of the identifier information, can send the identifier information simply and quickly.

Hence, the provider server 4 can receive the identifier information from a wide range of customers and quickly deal with a wide range of customers.

In addition, since the identifier information is sent using any one of the access buttons b1 through bn and the displaying means 1, convenience of customers is improved.

In the appliance information transmitting/receiving system according to the preferred embodiment or the modification of the same, upon receipt by the server 4 of the identifier information regarding the appliances (Step 2 in Fig. 3), when customer information is sent and displayed to the displaying means 1 for confirmation of the customers, the customer information which is sent may be viewed only after the customers enter secret codes.

This makes it possible to prevent leakage of customer information in case registered appliances are transferred to other customers.

If a secret code a customer entered is wrong, the server 4 sends a customer information registration screen once again to the displaying means 1 so that the displaying means 1 displays the screen.

Further, in the appliance information transmitting/receiving system according to the preferred embodiment or the modification of the same, it is not always necessary to dispose the displaying means 1 separately from the appliances A1 through An. Display apparatuses of the appliances A1 through An may be used instead of the displaying means 1.

For example, when an appliance is a television set, the television set itself may be used as the displaying means 1. When an appliance is a refrigerator, a liquid crystal display apparatus of the refrigerator may be used as the displaying means 1.

This structure makes the system easier for customers to use.

In addition, in Fig. 1 and Fig. 9, the displaying means 1 may comprise the telecommunications means and be connected directly with the network 3. In this case, communication between the displaying means 1 and the server 4 is realized directly on the network 3 without going through LAN 2.

A plurality of delivery company terminals 9 may be disposed. In this case, the plurality of delivery company terminals 9 may belong to different delivery companies. The plurality of delivery company terminals 9 may be installed in different areas.

Further, the service repairperson terminal 7 may be connected dixectly with the network 3. In this case, communications between the service repairperson terminal 7, the customer system 100 and the server 4 are realized directly on the network 3 without going through LAN 8.

A plurality of service repairperson terminals 7 may be disposed, and the plurality of service repairperson terminals 7 may be installed in different areas. In this case, at Step 841 shown in Fig. 7, customer information and the like is sent to the nearest service repairperson terminal 7 which is in charge of an area or the like for a customer.

The foregoing regarding the service repairperson terminal 7 applies equally to the consultation bureau terminal 6 as well.

Having described preferred embodiments of the invention with reference to the accompanying drawings, it is to be understood that the invention is not limited to those precise embodiments, and that various changes and modifications may be effected therein by one skilled in the art without departing from the scope or spirit of the invention as defined in the appended claims.

## Claims

1. An appliance information transmitting/receiving method for handling information regarding an appliance between said appliance and displaying means of a customer and a server of a provider through a network, comprising:
a first step at which said server receives identifier information specifying said appliance from said appliance through said network;
a second step at which when said server receives said identifier information, a menu of provider responses is sent to said displaying means through said network;
a third step at which said server receives from said displaying means through said network item information which said customer selected from said menu which is displayed by said displaying means; and
a fourth step at which when said server receives said item information selected by said customer, processing corresponding to said item information is performed;
at said first step, said identifier information which is received is sent by telecommunications means connected to said network and disposed in said appliance in response to a send instruction for said identifier information; and
at said second step, said menu which is sent is structured to have a different content in accordance with said identifier information.

2. The appliance information transmitting/receiving method as set forth in claim 1, wherein at said first step, said send instruction for said identifier information received by said server is issued by an access button disposed on said appliance is pressed.

3. The appliance information transmitting/receiving method as set forth in claim 1, wherein at said first step, said send instruction for said identifier information is issued by said appliance specified by said identifier information which is sent is selected from an appliance list which is displayed by said displaying means.

4. The appliance information transmitting/receiving method as set forth in claim 1, wherein at said first step, said server receives information expressing the state of said appliance specified by said identifier information together with said identifier information from said appliance through said network, and said identifier information which is received and said information expressing the state of said appliance is information which is sent through said network by said telecommunications means disposed to said appliance.

5. The appliance information transmitting/receiving method as set forth in claim 1, wherein said fourth step includes:
a step at which if said item information received from said displaying means is regarding an item to request repair work, when said appliance is to be collected and repaired, said server sends a menu of collecting methods to said displaying means through said network; and
a step at which said server receives from said displaying means through said network information regarding a collecting method selected by said customer from said menu of collecting methods displayed by said displaying means.

6. The appliance information transmitting/receiving method as set forth in claim 1, wherein said fourth step includes a step at which if said item information received from said displaying means is regarding an item to request repair work, when it is determined that said appliance is to be collected and repaired and said appliance is to be delivered to said provider via a third party, said server receives said identifier information regarding said appliance from a third party terminal through said network;
a step at which when said server receives said identifier information from said third party terminal, information regarding a delivery destination of said appliance is sent from said server to said third party terminal through said network; and
said information regarding said delivery destination of said appliance is in accordance with said identifier information received from said third party terminal.

7. The appliance information transmitting/receiving method as set forth in claim 1, wherein said first step includes a step at which when said identifier information received from said appliance is unregistered, information necessary for registration is sent to said displaying means from said server through said network.

8. The appliance information transmitting/receiving method as set forth in claim 1, wherein at said second step, said menu sent to said displaying means includes at least one of a telephone response request, a repair request, an operation method description request and an another menu display request.

9. The appliance information transmitting/receiving method as set forth in claim 1, wherein a plurality of said appliances are disposed and connected to a LAN, and
said telecommunications means ofany one of said appliances is connected to said network.

10. An appliance information transmitting/receiving system for handling information regarding an appliance between said appliance and displaying means of a customer and a server of a provider through a network, wherein
said appliance comprises telecommunications means which sends identifier information to said server through said network to which said telecommunications means is connected, when said telecommunications means receives a send instruction for said identifier information specifying said appliance, and
when said server receives said identifier information, said server structures a menu of provider responses into a different content in accordance with said identifier information and sends said menu to said displaying means through said network, and when said server receives item information which is selected by said customer from said menu displayed by said displaying means, said server performs processing corresponding to said item information.

11. An appliance information transmitting/receiving system comprising an appliance of a customer installed indoors and displaying means of said customer installed indoors, wherein
said appliance comprises telecommunications means which sends identifier information to a server of a provider through a network to which said telecommunications means is connected, when said telecommunications means receives a send instruction for said identifier information specifying said appliance,
said displaying means receives from said server through said network and displays a menu of provider responses which is in accordance with said identifier information, and receives from said server and displays information corresponding to item information selected by said customer from said menu which is displayed, and
said menu received by said displaying means is structured to have a different content in accordance with said identifier information.

12. An appliance information transmitting/receiving system, comprising:
a server of a provider for handling information regarding an appliance of a customer through a network; and
a customer information database which manages customer information, wherein
said server receives identifier information specifying said appliance from said appliance through said network,
when said server receives said identifier information, said server sends a menu of provider responses to displaying means of said customer through said network,
said server receives from said displaying means through said network item information selected by said customer from said menu which is displayed by said displaying means,
when said server receives said item information selected by said customer, said server performs processing corresponding to said item information,
said identifier information which is received is information which is sent from telecommunications means disposed to said appliance through said network in accordance with a send instruction for said identifier information,
said menu which is sent is structured to have a different content in accordance with said identifier information, and
during said processing corresponding to said item information, said customer information database is used in accordance with said item information.

13. The appliance information transmitting/receiving system as set forth in claim 11, wherein said send instruction for said identifier information is issued by an access button disposed on said appliance is pressed.

14. The appliance information transmitting/receiving system as set forth in claim 11, wherein said send instruction for said identifier information is issued by said appliance specified by said identifier information which is sent is selected from an appliance list which is displayed by said displaying means.

15. The appliance information transmitting/receiving system as set forth in claim 11, wherein said appliance and said displaying means are structured integral with each other.

16. The appliance information transmitting/receiving system as set forth in claim 11, wherein said telecommunications means sends information expressing the state of said appliance specified by said identifier information together with said identifier information to said server through said network.

17. The appliance information transmitting/receiving system as set forth in claim 12, wherein if said item information received from said displaying means is regarding an item to request repair work, when said appliance is to be collected and repaired, said server sends a menu of collecting methods to said displaying means through said network and receives from said displaying means through said network information regarding a collecting method selected by said customer.

18. The appliance information transmitting/receiving system as set forth in claim 12, wherein if said item information received from said displaying means is regarding an item to request repair work, when said server determines that said appliance needs to be collected and repaired and said appliance is to be delivered to said provider via a third party, said server receives said identifier information regarding said appliance from a third party terminal through said network and accordingly sends information regarding a delivery destination of said appliance to said third party terminal through said network, and
said information regarding said delivery destination of said appliance is in accordance with said identifier information received from said third party terminal.

19. The appliance information transmitting/receiving system as set forth in claim 12, wherein when said identifier information received from said appliance is unregistered, said server sends information necessary for registration to said displaying means from said server through said network.

20. The appliance information transmitting/receiving system as set forth in claim 12, wherein said menu of provider responses which is sent from said server to said displaying means includes at least one of a telephone response request, a repair request, an operation method description request and an another menu display request.

21. The appliance information transmitting/receiving system as set forth in claim 11, wherein a plurality of said appliances are disposed and connected to a LAN, and
said telecommunications means of any one of said appliances is connected to said network.
